# EUROPEAN PATENT SPECIFICATION

(11) **EP 1 166 199 B1**
(45) Date of publication and mention of the grant of the patent: **12.05.2004**
(21) Application number: 01902543.6
(22) Date of filing: 02.02.2001
(51) Int. Cl.: G06F 3/00, G06F 3/033

(54) **VIRTUAL USER INTERFACE FOR MOBILE TELECOMMUNICATIONS DEVICE**
VIRTUELLE BENUTZERSCHNITTSTELLE FÜR MOBILE TELEKOMMUNIKATIONSVORRICHTUNG
INTERFACE UTILISATEUR VIRTUELLE DESTINEE A UN DISPOSITIF DE TELECOMMUNICATIONS MOBILES

(30) Priority: 04.02.2000 GB 0002470
(43) Date of publication of application: 02.01.2002
(73) Proprietor: ROKE MANOR RESEARCH LIMITED, Romsey, Hants SO51 0ZN (GB)
(72) Inventor: SALTER, David, Romsey, Hampshire SO51 5PH (GB)
(74) Representative: Condon, Neil
(86) International application number: PCT/GB2001/000428
(87) International publication number: WO 2001/057632

(56) References cited:
- EP-A- 0 982 676
- WO-A-00/21024
- WO-A-98/19435

## Description

The present invention relates to a mobile telephone arrangement.

With the development of third generation mobile telephones or terminals, referred to hereinafter as mobile units, there is likely to be a rapid growth in the different application and uses of such mobiles. Third generation mobile units will have sufficient bandwidth to transmit video and to allow access to the Internet. However, one potential problem is how to display the images and provide the human interface when accessing the Internet, for example.

WO 00121024 which is prior art pursuant to Article 54(3) and (4) EPC, describes a computing device that receives inputs using images of input devices and scanning sensors that detect user interaction with those images.

It is an object of the present invention to provide a mobile telephone arrangement which includes means for displaying images.

It is another object of the present invention to provide means for interacting with such images when accessing the Internet.

In accordance with one aspect of the present invention, there is provided an arrangement comprising: a mobile telephone connected to: projector means for projecting an image onto a surface; and to means for detecting user interaction with said image, to input signals to said mobile telephone.

Said means for detecting user interaction with said image may comprise a camera means having a field of view substantially the same as said image. Said camera means may be arranged to detect the location of a pointer means movable within said image.

In a preferred embodiment of the present invention, said camera means is built into said mobile telephone. Said projector means may also be built into said mobile telephone.

In a further embodiment of the present invention, cradle means is provided for connecting with said mobile telephone. Said projector means may be mounted in said cradle means. Said means for detecting user interaction with said image may also mounted in said cradle means.

For a better understanding of the present invention, reference will now be made, by way of example only, to the accompanying drawings, in which:-
Figure 1 illustrates an embodiment of the present invention; and
Figure 2 is a block diagram of a mobile telephone in accordance with the present invention.

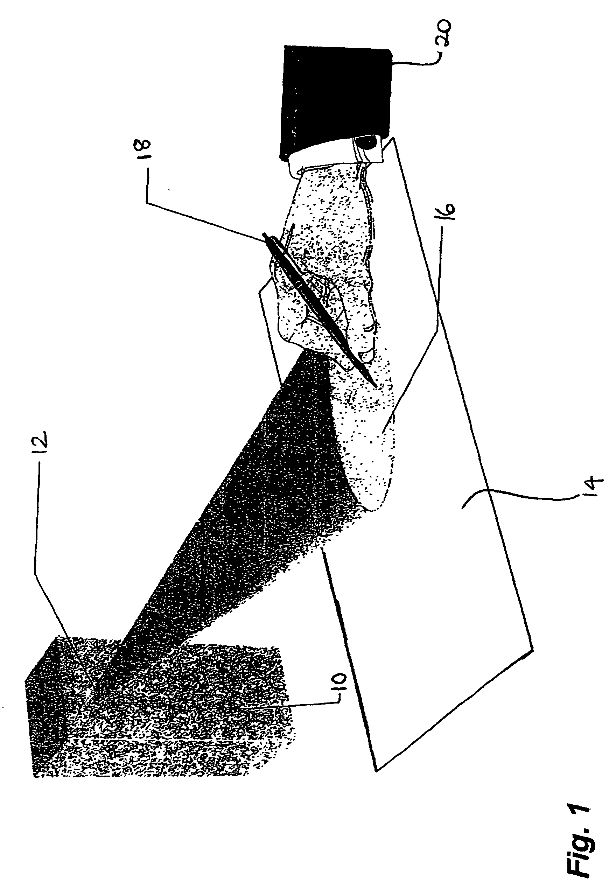

In Figure 1, a mobile telephone 10 is shown which includes a projector and camera unit, shown schematically as 12. However, although the projector and camera unit 12 is shown as a single device, it will be appreciated that the projector and the camera may be separate devices within the mobile telephone 10. The projector and camera unit 12 is built into the mobile telephone 10, and operates both to project the main display of the mobile unit onto a surface 14 as a virtual display 16 and to allow the selection of icons (not shown) forming part of the virtual display 16 by detecting the position of a pointer 18 within the virtual display 16.

The surface 14 may be substantially horizontal and may comprise a sheet of paper onto which the virtual display 16 is projected. The pointer 18 can be moved by a user 20 within the virtual display 16 to select the icons.

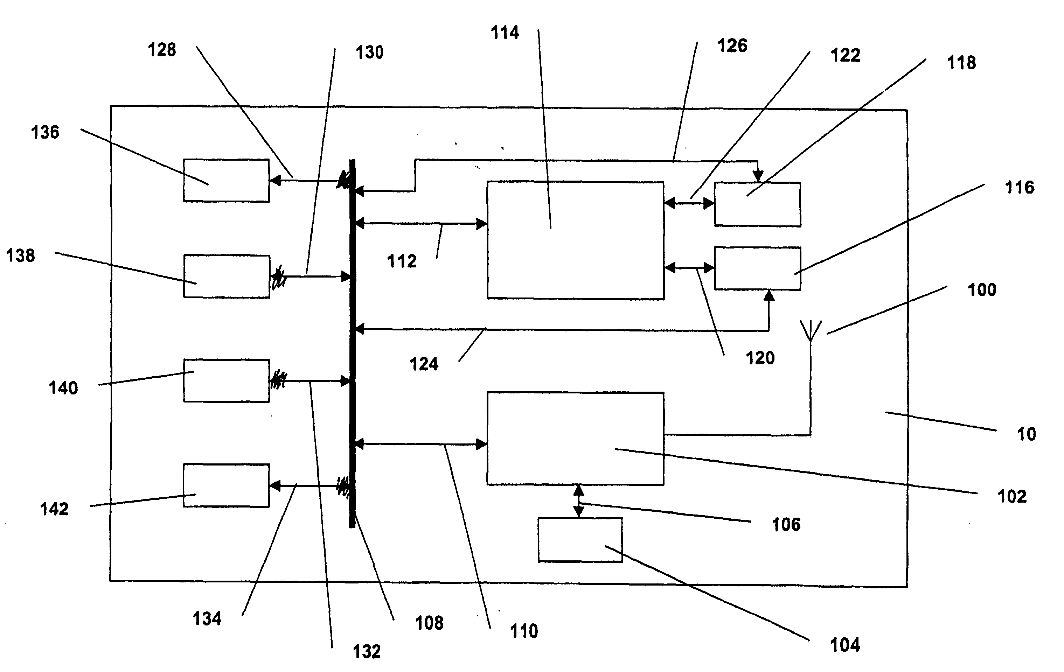

Figure 2 illustrates a block diagram of a mobile telephone 10 in accordance with the present invention. The mobile telephone 10 includes an antenna 100 for receiving and transmitting signals to a base station (not shown). The antenna 100 is connected to a digital signal processing (DSP) unit 102 which processes the received signal and prepares a signal for transmission, that is, carries out any processing associated with the telecommunications network to which the mobile telephone 10 is connected. It will be appreciated that the telecommunications network may comprise a conventional mobile telecommunications network or a network through which the Internet can be accessed. In either case, suitable protocols are employed to enable appropriate of the signals both after reception and prior to transmission.

A buffer 104 is connected to the DSP unit 102 via a bi-directional link 106, the buffer storing data from the DSP unit 102. The DSP unit 102 is also connected to a communications bus 108 via a bi-directional link 110.

Also connected to the bus 108 via a bi-directional link 110 is a processor unit 112. Processor unit 112 carries out processing associated with image processing as will be described in more detail later. Processor unit 112 is also connected to a read-only memory (ROM) 116 and a random access memory (RAM) 118 via respective bi-directional links 120 and 122. The ROM 116 and the RAM 118 are also connected directly to the bus 108 via respective bi-directional links 124 and 126 respectively. The ROM 116 stores programs for access by the processor 114. The RAM 118 provides a memory for the processor unit 114.

Also connected to the bus 108 via respective links 128, 130, 132 and 134 are projector unit 136, camera unit 138, microphone unit 140 and speaker unit 142. Links 128, 130, 132 and 134 are uni-directional links, links 128 and 134 allowing control signals on the bus 108 to be fed to the projector unit 136 and speaker unit 142 respectively and links 130, 132 allowing signals to be fed from the camera unit 138 and microphone unit 140 respectively to the bus 108.

The projector unit 136, camera unit 138, microphone unit 140 and speaker unit 142 can be controlled by the processor unit 114 or the DSP unit 102 via the appropriate bi-directional link and the bus 108.

The projector unit 136 produces the virtual display 16 as shown in Figure 1 under the control of the processor unit 114. The image signal which is to be projected as the virtual display 16 is received by the antenna 100, processed by the DSP unit 102 and the processor unit 114 before being sent to the projector unit 136 for display.

The camera unit 138 effectively has the same field of view as the virtual display 16 so that the location of the pointer 18 can be determined. When the pointer 18 is detected within the field of view of the camera unit 138, the camera unit 138 provides a signal for the processor unit 114 which indicates the position of the pointer 18 and is converted into a signal for the DSP unit 102 for transmission via antenna 100 back to the network to which the mobile telephone 10 is connected. As discussed above, the DSP unit 102 will process the signals in accordance with the appropriate protocol for that particular transmission.

The microphone unit 140 and speaker unit 142 comprise components which are currently employed in conventional mobile units. For normal voice transmissions only, signals received at the antenna 100 are processed by the DSP unit 102 and fed to the speaker unit 142 via link 110, bus 108 and link 134 so that a user can hear the voice transmission. Similarly, the microphone unit 140 receives voice from the user and converts it to signals for the DSP unit 102 prior to transmission through the antenna to the network, the signals passing from the microphone unit 140 to the DSP unit 102 via link 132, bus 108 and link 110.

As shown in Figure 1, it is possible to stand the mobile telephone 10 substantially upright so that the projector unit 136 can project the virtual display 16 onto surface 14. If the mobile telephone 10 is connected to an Internet site via an Internet server, the DSP unit 102 processes the received signal to provide video signals for the processor unit 114 and audio signals for the speaker unit 142. The processor unit 114 processes the video signals and provides a signal for the projector unit 136 which is eventually projected onto surface 14 as the virtual display 16.

In accordance with the present invention, the projector unit 136 projects a virtual display 16 onto surface 14 which may simply be a sheet of white paper positioned in front of the mobile telephone 10. As discussed above, pointer 18 is used to select icons in the virtual display 16 and the camera unit 138 determines the position of the pointer 18 with respect to the virtual display 16 to provide a signal for the DSP unit 102 for transmission via antenna 100 to the Internet server. The user 20 controls the pages/display by using the pointer 18 in a similar fashion to a touch sensitive screen, but in this case, the location of the pointer 18 is detected by the camera unit 138.

It will readily be appreciated that it may be possible to vary the angle of the projector unit 136 so that the virtual display 16 can be projected surfaces at angles other than substantially horizontal, for example, onto a wall for the purposes of presentations etc.

As shown in Figure 1, the mobile telephone 10 is substantially upright to allow the projector and camera unit 12 to operate effectively. The mobile telephone 10 may have a stand or other means (not shown) which allows it to be positioned substantially upright.

However, it will be appreciated that it may not be practical in some instances for the mobile telephone 10 to include the projector and camera unit 12 as described above with reference to Figures I and 2. In these cases, the mobile telephone 10 could be mounted within a cradle (not shown) which houses the projector unit and the camera unit, the mobile telephone 10 being connected to the projector unit and the camera unit by a suitable interface. Such a cradle could also include a separate speaker unit to amplify received audio signals.

## Claims

1. An arrangement comprising:
a mobile telephone (1) connected to:
projector means (12,136) for projecting an image onto a surface; and
to means (12,138) for detecting user interaction with said image, to input signals to said mobile telephone.

2. An arrangement according to claim 1, wherein said means (12, 138) for detecting user interaction with said image comprises a camera means (138) having a field of view substantially the same as said image.

3. An arrangement according to claim 2, wherein said camera means (138) is arranged to detect the location of a pointer means (18) movable within said image.

4. An arrangement system according to claim 2 or 3, wherein said camera means (138) is built into said mobile telephone (10).

5. An arrangement according to any preceding claim, wherein said projector means (12, 136) is built into said mobile telephone (10).

6. An arrangement according to any one of claims 1 to 3, further comprising cradle means for connecting with said mobile telephone (10).

7. An arrangement according to claim 5, wherein said projector means (12, 136) is mounted in said cradle means.

8. An arrangement according to claim 5 or 6, wherein said means (12, 138) for detecting user interaction with said image is mounted in said cradle means.

## Patentansprüche

1. Ein mobiles Telekommunikationsgerät mit folgenden Komponenten:
einem Mobiltelefon (10)
einem Projektor (12, 136) zur Darstellung von Bilddaten auf einer Oberfläche
sowie
einer Einrichtung (12, 138), die Benutzerzugriffe auf die vorgenannten Bilddaten erkennt und entsprechende Signale an das Mobiltelefon ausgibt.

2. Ein Gerät gemäß Anspruch 1, bei dem die besagte Einrichtung (12, 138) zur Erkennung von Benutzerzugriffen auf die Bilddaten den Einsatz einer Kamera (138) vorsieht, die über ein Sehfeld verfügt, das im Wesentlichen dem besagten Bild entspricht.

3. Ein Gerät gemäß Anspruch 2, bei dem die Kamera (138) so angeordnet ist, dass sie die Position einer Zeigevorrichtung (18), die sich innerhalb des besagten Bilds bewegen lässt, registriert.

4. Ein Gerät gemäß Anspruch 2 oder 3, bei dem die Kamera (138) in das Mobiltelefon (10) integriert ist.

5. Ein Gerät gemäß einem der vorangehenden Ansprüche, bei dem der Projektor (12, 136) in das Mobiltelefon (10) integriert ist.

6. Ein Gerät gemäß einem der vorangehenden Ansprüche 1 bis 3, das zusätzlich über eine Auflage für den Anschluss des Mobiltelefons (10) verfügt.

7. Ein Gerät gemäß Anspruch 5, bei dem der Projektor (12, 136) in die Auflage integriert ist.

8. Ein Gerät gemäß Anspruch 5 oder 6, bei dem die Einrichtung (12, 138) zur Erkennung von Benutzerzugriffen auf das besagte Bild in die Auflage montiert ist.

## Revendications

1. Appareil de télécommunication mobile comprenant :
un téléphone mobile (10) ;
un moyen formant projecteur (12, 136) pour projeter une image sur une surface, et
un moyen (12, 138) pour détecter l'interaction de l'utilisateur avec ladite image, pour appliquer des signaux audit téléphone mobile.

2. Appareil selon la revendication 1, dans lequel ledit moyen (12, 138) pour détecter l'interaction de l'utilisateur avec ladite image est constitué par un moyen formant caméra (138) ayant un champ visuel sensiblement le même que ladite image.

3. Appareil selon la revendication 2, dans lequel ledit moyen formant caméra (138) est agencé pour détecter l'emplacement d'un moyen formant pointeur (18) déplaçable à l'intérieur de ladite image.

4. Appareil selon la revendication 2 ou 3, dans lequel ledit moyen formant caméra (138) est intégré dans ledit téléphone mobile (10).

5. Appareil selon l'une quelconque des revendications précédentes, dans lequel ledit moyen formant projecteur (12, 136) est intégré dans ledit téléphone mobile (10).

6. Appareil selon l'une quelconque des revendications 1 à 3, comprenant en outre un moyen formant berceau à connecter audit téléphone mobile (10).

7. Appareil selon la revendication 5, dans lequel ledit moyen formant projecteur (12, 136) est monté dans le moyen formant berceau.

8. Appareil selon la revendication 5 ou 6, dans lequel ledit moyen (12, 138) pour détecter l'interaction de l'utilisateur avec ladite image est monté dans ledit moyen formant berceau.
